# EUROPEAN PATENT APPLICATION

(11) **EP 3 115 821 A1**
(43) Date of publication of application: **11.01.2017**
(21) Application number: 16178445.9
(22) Date of filing: 07.07.2016
(51) Int. Cl.: G02B 7/08, G02B 27/64, G02B 13/00, H04M 1/02

(54) **MINIATURE LENS-DRIVING APPARATUS**

(30) Priority: 09.07.2015 CN 201510400251
(71) Applicant: Lam, Sio Kuan, Tuen Mun (HK); Sunming Technologies (HK) Limited, Tuen Mun, Hong Kong (CN)
(72) Inventor: LAM, Sio Kuan, Tuen Mun, Hong Kong (CN)
(74) Representative: Becker Kurig Straus

(57) **Abstract**

A miniature lens driving apparatus is provided, including a housing 4, at least two strings 3, an optical image stabilization mechanism 2, and an autofocus mechanism 1, wherein the optical image stabilization mechanism 2 includes a lens holder 21 for holding an imaging lens, the optical image stabilization mechanism 2 may move the lens holder along a direction substantially perpendicular to an optical axis, the autofocus mechanism I includes an autofocus moving holder 11 (or referred to as an autofocus moving platform), the autofocus mechanism 1 may move the autofocus moving holder along a direction of the optical axis, one end of each of the at least two strings 3 is connected to the lens holder 21, and the other end of each of the at least two strings 3 is connected to the autofocus moving holder 11.

## Description

### TECHNICAL FIELD

The present invention relates to a lens driving apparatus, and more particularly to a miniature lens driving apparatus used in a compact miniature camera module in a portable electronic device.

### BACKGROUND

Compact camera module has been widely adopted in many types of portable electronic devices such as smart phones. Many sophisticated camera functions, such as autofocus, have been integrated into compact camera modules. Recently, the market is requesting camera modules equipped with optical image stabilization function. This in turn requests the camera modules to have a lens driving apparatus which is capable of moving the imaging lens along X, Y, and Z directions.

### SUMMARY

An objective of the present invention is to propose, in view of the foregoing technical problem, a miniature lens driving apparatus which is capable of moving the imaging lens along X, Y, and Z directions.

There is provided a miniature lens driving apparatus, including a housing 4, at least two strings 3, an optical image stabilization mechanism 2, and an autofocus mechanism 1, wherein the optical image stabilization mechanism 2 includes a lens holder 21 for holding an imaging lens, the optical image stabilization mechanism 2 may move the lens holder 21 along a direction substantially perpendicular to an optical axis, the autofocus mechanism 1 includes an autofocus moving holder I (or referred to as an autofocus moving platform), the autofocus mechanism 1 may move the autofocus moving holder 11 along a direction of the optical axis, one end of each of the at least two strings 3 is connected to the lens holder 21, and the other end of each of the at least two strings 3 is connected to the autofocus moving holder 11.

There is provided a miniature lens driving apparatus, including a housing 4, at least two strings 3, an optical image stabilization mechanism 2, and an autofocus mechanism 1, wherein the optical image stabilization mechanism 2 further includes a lens holder 21 for holding an imaging lens, at least two coils 22 and at least one magnet 5. At least two coils 22 and at least one magnet 5 are operatively associated with each other, to move the lens holder 21 along a direction substantially perpendicular to an optical axis, wherein the autofocus mechanism 1 further includes an autofocus moving holder 11 (or referred to as an autofocus moving platform) that may move back and forth in a direction of the optical axis, at least one coil 12, at least one magnet 5, an upper spring sheet 61, and a lower spring sheet 62, the at least one coil 12 and the at least one magnet 5 are operatively associated with each other, to move the autofocus moving holder 11 along the direction of the optical axis, an internal connecting portion 633 of the upper spring sheet 61 is connected to an upper end of the autofocus moving holder 11, an outer connecting portion 611 of the upper spring sheet 61 is connected to a stationary part of the autofocus mechanism 1, an internal connecting portion 633 of the lower spring sheet 62 is connected to a lower end of the autofocus moving holder 11, and an outer connecting portion 611 of the lower spring sheet 62 is connected to the stationary part of the autofocus mechanism 1; one end of each of the at least two strings 3 is connected to the lens holder 21, and the other end of each of the at least two strings 3 is connected to the autofocus moving holder 11.

In the miniature lens driving apparatus provided in the present invention, the optical image stabilization mechanism 2 and the autofocus mechanism 1 share at least one magnet 5.

In the miniature lens driving apparatus provided in the present invention, the autofocus moving holder 11 and the lens holder 21 are connected to each other by using at least two strings 3, so that the autofocus moving holder 11 drives, by using the strings 3, the lens holder 21 to move along the optical axis.

In the miniature lens driving apparatus provided in the present invention, an upper spring sheet 61 is disposed at an end of the autofocus moving holder 11, and a lower spring sheet 62 is disposed at the other end of the autofocus moving holder 11. Internal connecting portions of the upper spring sheet 61 and the lower spring sheet 62 are connected to the autofocus moving holder, while outer connecting portions of the upper spring sheet 61 and the lower spring sheet 62 are connected to a stationary part of the autofocus mechanism 1. The upper spring sheet 61 and the lower spring sheet 62 deform elastically following the action of the autofocus moving holder 11. When a current decreases or is off, an autofocus coil drives the autofocus moving holder 11 to restore the original position, so as to implement restoration of the lens holder 21 to the original position.

In the miniature lens driving apparatus provided in the present invention, a string connecting piece 10 is a printed circuit board (PCB) disposed with a circuit 101 and/or a pad 102.

In the miniature lens driving apparatus provided in the present invention, a reinforcing element 9 is further disposed between the autofocus moving holder 11 and the lower spring sheet 62, so that the autofocus moving holder 11 become more rigid and reliable, and a deformation does not occur easily.

### BRIEF DESCRIPTION OF THE DRAWINGS

FIG. 1a is a schematic structural diagram of a miniature lens driving apparatus according to an embodiment of the present invention;
FIG. 1b is a schematic structural diagram of a miniature lens driving apparatus according to another embodiment of the present invention;
FIG. 1c is a schematic structural diagram of a miniature lens driving apparatus according to still another embodiment of the present invention;
FIG. 2a is a schematic structural diagram of the miniature lens driving apparatus according to an embodiment of the present invention;
FIG. 2b is a schematic structural exploded diagram of the miniature lens driving apparatus according to an embodiment of the present invention;
FIG. 2c is a schematic structural sectional diagram of the miniature lens driving apparatus according to an embodiment of the present invention;
FIG. 3a is a schematic exploded diagram of an optical image stabilization mechanism 2 according to an embodiment of the present invention;
FIG. 3b is an overall schematic structural diagram of the optical image stabilization mechanism 2 according to an embodiment of the present invention;
FIG. 3c is a schematic structural diagram of a string connecting piece 10 according to an embodiment of the present invention;
FIG. 4a is a schematic exploded diagram of the autofocus mechanism 1 according to an embodiment of the present invention;
FIG. 4b is a schematic diagram of assembly of parts of the autofocus mechanism 1 according to an embodiment of the present invention;
FIG. 4c is a schematic structural diagram of the assembled autofocus mechanism 1 according to an embodiment of the present invention;
FIG. 4d is a schematic sectional diagram of the autofocus mechanism 1 according to an embodiment of the present invention;
FIG. 5 is a schematic structural diagram of a connection manner of strings 3 according to an embodiment of the present invention;
FIG. 6a is a first schematic structural diagram of a spring sheet according to an embodiment of the present invention; and
FIG. 6b is a second schematic structural diagram of a spring sheet according to an embodiment of the present invention.

### DETAILED DESCRIPTION

For the purpose of understanding the technical features, objectives and effects of the present invention more clearly, specific embodiments of the present invention are illustrated in detail with reference to accompanying drawings. In the following detailed description, numerous specific details are set forth to provide a thorough understanding of claimed subject matter. However, it will be understood by those skilled in the art that claimed subject matter may be practiced without these specific details. In other instances, methods, apparatuses, or systems that would be known by one of ordinary skill have not been described in detail so as to avoid rendering claimed subject matter unclear.

Reference throughout this specification to "one embodiment" or "an embodiment" may mean that a particular feature, structure, or characteristic described in connection with a particularly embodiment may be included in at least one embodiment of claimed subject matter. Thus, appearances of the phrase "in one embodiment" or "an embodiment" in various places throughout this specification are not necessarily intended to refer to the same embodiment or to any one particular embodiment described. Furthermore, it is to be understood that particular features, structures, or characteristics described may be combined in various ways in one or more embodiments. In general, of course, these and other issues may vary with the particular context of usage. Therefore, the particular context of the description or the usage of these terms may provide helpful guidance regarding inferences to be drawn for that context.

Likewise, the terms, "and", "and/or," and "or" as used herein may include a variety of meanings that also is expected to depend at least in part upon the context in which such terms are used. Typically, "or" as well as "and/or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe some combination of features, structures, or characteristics. Though, it should be noted that this is merely an illustrative example and claimed subject matter is not limited to this example.

As described in the specification, it should be understood that orientation or positional relationships indicted by terms "front", "rear", "above", "below", "upper end", "lower end", "upper", "lower" and so on, are based on those illustrated in the drawings, only for ease of description of the present invention and to simplify the description, but not to indicate or imply that referred devices or components must have a particular orientation, or constructed and operated with the particular orientation. Therefore, these illustrations cannot be construed as limiting the present invention. Accordingly, "upper" and "lower" may be equivalently interchanged with "top" and "bottom", "first" and "second", "right" and "left", and so on. In the specification, a direction of an optical axis is used as the Z axis, and a plane perpendicular to the Z axis is used as a plane dictated by the X axis and the Y axis to establish a Cartesian coordinate system.

It should be noted that throughout the specification and claims herein, when one element is said to be "coupled" or "connected" to another, this does not necessarily mean that one element is fastened, secured, or otherwise attached to another element. Instead, the term "coupled" or "connected" means that one element is either connected directly or indirectly to another element or is in mechanical or electrical communication with another element.

It should be understood that the protection is not limited to the preferred embodiments described hereinabove and, needless to say, a variety of modifications or variations may be made without departing from the scope of the protection defined herein.

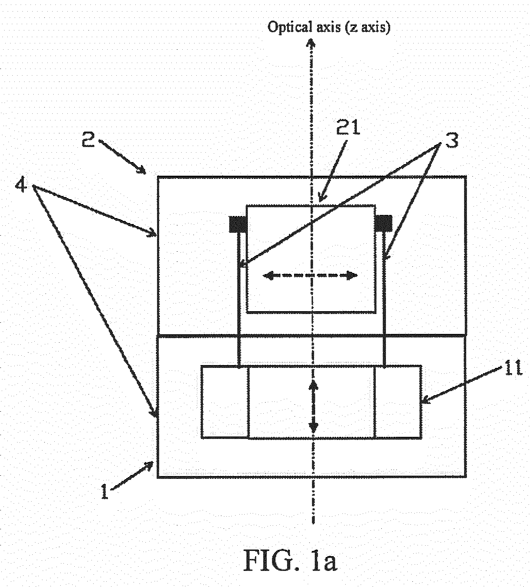

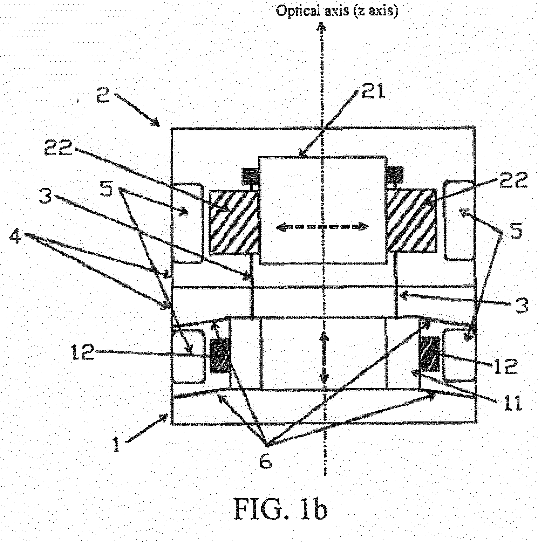

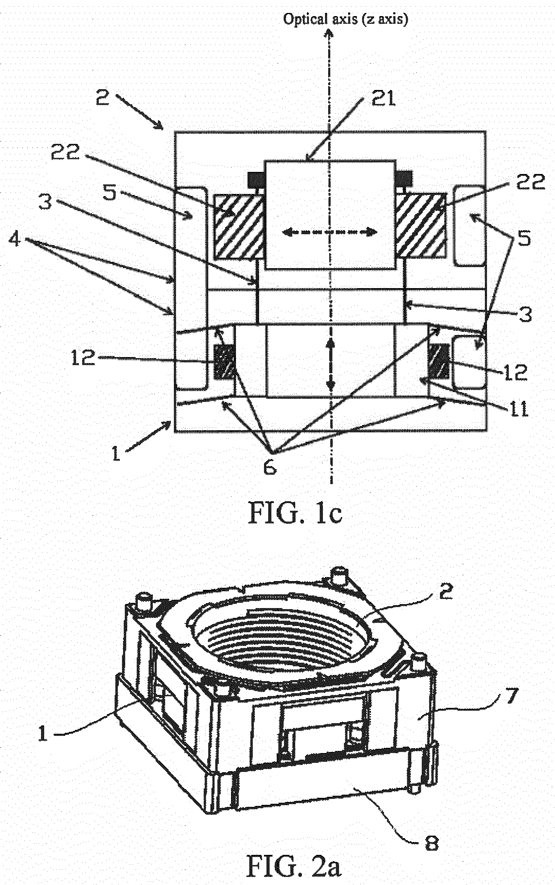

FIG. 1a is a schematic diagram of an embodiment of a miniature lens driving apparatus according to the present invention. In FIG. 1, a dotted double-headed arrow perpendicular to an optical axis (the Z axis) is an action direction of an optical image stabilization mechanism 2, and a dotted double-headed arrow parallel to the optical axis (the Z axis) is an action direction of an autofocus mechanism 1. As shown in the figure, the miniature lens driving apparatus provided in the present invention includes a housing 4, at least two strings 3, the optical image stabilization mechanism 2, and the autofocus mechanism 1. The optical image stabilization mechanism 2 includes a lens holder 21 used to hold a lens, where the autofocus mechanism 1 includes an autofocus moving holder 11 (or referred to as an autofocus moving platform) that may move back and forth in a direction of the optical axis. An end of each of the at least two strings 3 is connected to the lens holder 21, and the other end of each of the at least two strings 3 is connected to the autofocus moving holder 11. In the miniature lens driving apparatus according to the present invention, the optical image stabilization mechanism 2 is used to move the lens holder 21 along a direction (represented by the dotted double-headed arrow in a horizontal direction in FIG. 1a) substantially perpendicular to the optical axis. The autofocus mechanism 1 is used to move the autofocus moving holder 11 to move back and forth in the direction (represented by the dotted double-headed arrow in a perpendicular direction in FIG. 1a) of the optical axis. Since the autofocus moving holder 11 and the lens holder 21 are connected by using the at least two strings 3, the back-and-forth movement of the autofocus moving holder 11 in the direction of the optical axis is transferred to the lens holder 21 by using the at least two strings 3, which forces the lens holder 21 to follow the autofocus moving holder 11 to accordingly move back and forth in the direction of the optical axis. Therefore, the miniature lens driving apparatus of the present invention implements a function of driving the lens holder 21 along directions X, Y, and Z.

FIG. 1b is a schematic diagram of an embodiment of a miniature lens driving apparatus according to the present invention. As shown in the figure, the miniature lens driving apparatus provided in the present invention includes a housing 4, at least two strings 3, an optical image stabilization mechanism 2, and an autofocus mechanism 1. The optical image stabilization mechanism 2 further includes a lens holder 21 used to support an imaging lens, at least two coils 22, and at least one magnet 5. The at least two coils 22 and the at least one magnet 5 are operatively associated with each other, to move the lens holder 21 along a direction substantially perpendicular to an optical axis. The autofocus mechanism 1 further includes an autofocus moving holder 11 (or referred to as an autofocus moving platform) that may move back and forth in a direction of the optical axis, at least one coil 12, at least one magnet 5, and spring sheets 6 (an upper spring sheet 61 and a lower spring sheet 62). The at least one coil 12 and the at least one magnet 5 are operatively associated with each other, to move the autofocus moving holder 11 along a direction of the optical axis. An internal connecting portion 633 of the upper spring sheet 61 is connected to an upper end of the autofocus moving holder 11, while an outer connecting portion 611 of the upper spring sheet 61 is connected to a stationary part of the autofocus mechanism 1. An internal connecting portion 633 of the lower spring sheet 62 is connected to a lower end of the autofocus moving holder 11 and an outer connecting portion 611 of the lower spring sheet 62 is connected to the stationary part of the autofocus mechanism 1. An end of each of the at least two strings 3 is connected to the lens holder 21, and the other end of each of the at least two strings 3 is connected to the autofocus moving holder 11. In some other embodiments of the present invention, the optical image stabilization mechanism 2 and the autofocus mechanism 1 share at least one magnet 5 (as shown in FIG. 1c).

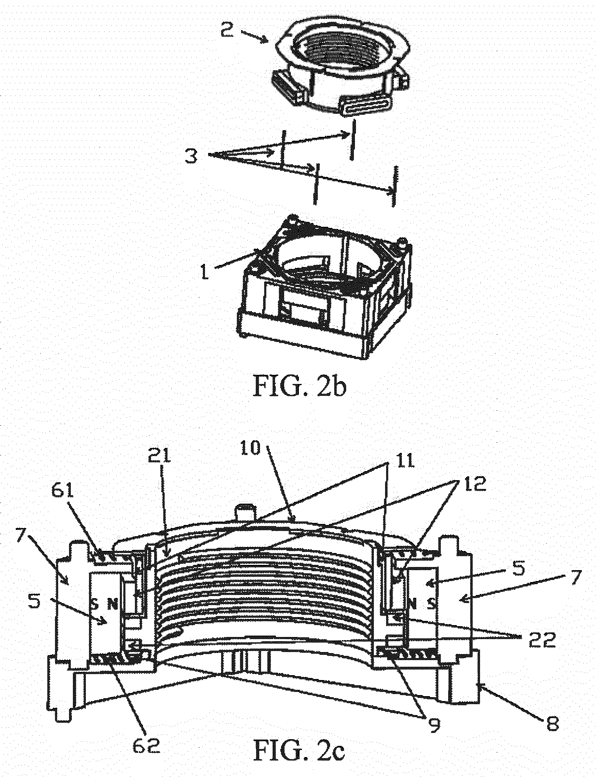

FIG. 2a is a schematic structural diagram (the part of the housing 4 is omitted) of an embodiment of the miniature lens driving apparatus of the present invention. FIG. 2b is a structural exploded diagram (the part of the housing 4 is omitted) of this embodiment. FIG. 2c is a sectional diagram (the part of the housing 4 is omitted) along a diagonal of this embodiment. As shown in FIG. 2b, the miniature lens driving apparatus of the present invention includes an optical image stabilization mechanism 2, an autofocus mechanism 1, and at least two strings 3. In this embodiment, four strings 3 are preferably disposed. Needless to say, the use of two, three, five or more strings 3 during implementation also does not depart from the scope of protection defined herein. Compared with FIG. 1, in this embodiment, the optical image stabilization mechanism 2 is not simply installed on the autofocus mechanism 1. Instead, the optical image stabilization mechanism 2 and the autofocus mechanism 1 are sleeved together. An advantage of this measure is a compact structure, and a total height of an entire miniature lens driving apparatus may also decrease significantly. Meanwhile, this measure also enables the optical image stabilization mechanism 2 and the autofocus mechanism 1 to share a same magnet 5 (see FIG. 2c). Specifically, in FIG. 2c, a coil 12 is disposed on the autofocus moving holder 11 of the autofocus mechanism 1. The coil 12 and an upper part of the magnet 5 exert effects on each other, to generate an electromagnetic force in the direction of the optical axis, to move the autofocus moving holder 11 along the direction of the optical axis. Because of the effect of the strings 3, the movement of the autofocus moving holder 11 is transferred to the lens holder 21, to force the lens holder 21 to move along the optical axis together with the autofocus moving holder 11. In addition, the coil 22 disposed on the lens holder 21 and a lower portion of the magnet 5 exert effects on each other, to generate an electromagnetic force substantially perpendicular to the optical axis, to move the lens holder 21 along the direction substantially perpendicular to the optical axis. Although in FIG. 2c, the south and north poles of the magnet 5 are indicated, needless to say, in an embodiment, the use of a magnet 5 having an opposite polarity or a magnet 5 having another shape and polarity also does not depart from the scope of protection defined herein.

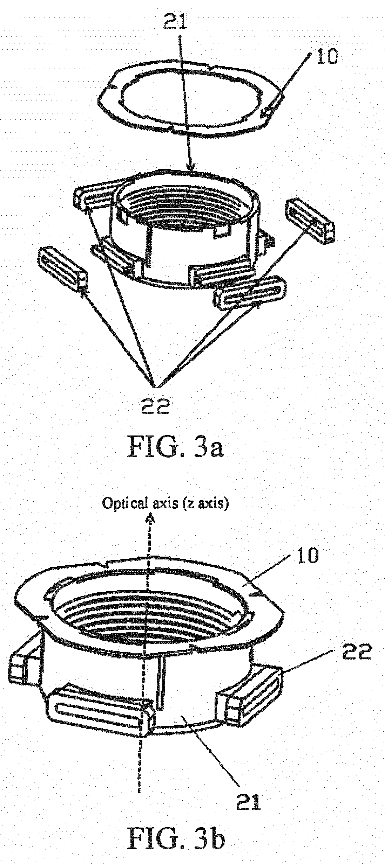

FIG. 3a is a schematic exploded diagram of the optical image stabilization mechanism 2 of this embodiment. As shown in the figure, the optical image stabilization mechanism 2 includes a lens holder 21, at least two coils 22 disposed on the lens holder 21, and a string connecting piece 10. The string connecting piece 10 is fixed on the lens holder 21. In this embodiment, preferably, four coils 22 are disposed on the lens holder 21. Needless to say, the use of two, three, four or more coils 22 during implementation also does not depart from the scope of protection defined herein. The optical image stabilization mechanism 2 in this embodiment does not include the magnet 5. At least two coils 22 that are disposed on the lens holder 21 and the at least one magnet 5 of the autofocus mechanism 1 are operatively associated with each other, to move the lens holder 21 along the direction substantially perpendicular to the optical axis. Therefore, in this embodiment, the optical image stabilization mechanism 2 and the autofocus mechanism 1 share the magnet 5.

In some other embodiments, the optical image stabilization mechanism 2 further includes at least one magnet 5 in addition to a lens holder 21, at least two coils 22 disposed on the lens holder 21, and a string connecting piece 10. The string connecting piece 10 is fixed on the lens holder 21. The at least two coils 22 that are disposed on the lens holder 21 and the at least one magnet 5 of the optical image stabilization mechanism 2 are operatively associated with each other, to move the lens holder 21 along the direction substantially perpendicular to the optical axis. In such an embodiment, each of the optical image stabilization mechanism 2 and the autofocus mechanism 1 has its own dedicated magnet 5.

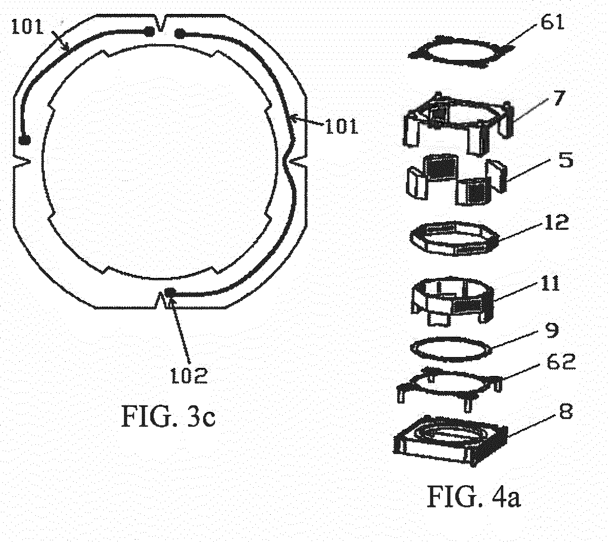

FIG. 3c shows the string connecting piece 10 of the optical image stabilization mechanism 2. The string connecting piece 10 is disposed at an upper end of the lens holder 21. The string connecting piece 10 has a plate-form structure. The string connecting piece 10 may be formed of an electrically conductive material, an insulating material or a composite material, for example, a PCB board. When the string connecting piece 10 is a PCB board, a circuit 101 may be further printed thereon or a pad 102 may be further disposed thereon. Even in a case in which an electrically conductive material or an insulating material is used, the circuit 101 may be further disposed on the string connecting piece 10. For example, a copper wire may be used to electrically connect several points on the string connecting piece 10. In a case in which an electrically conductive material is used for the string connecting piece 10, insulation processing requires special attention, to prevent the circuit 101 from short circuiting. In this embodiment, the string connecting piece 10 is fixed at the upper end of the lens holder 21. In some other embodiments, the string connecting piece 10 may be fixed at any position on the lens holder 21. In some other embodiments, the string connecting piece 10 may be combined with the lens holder 21 to form a whole, as shown in FIG. 3b. In such a case, the string connecting piece 10 may be various structures such as some protrusions, rings, holes, and convex or concave portions on the lens holder 21.

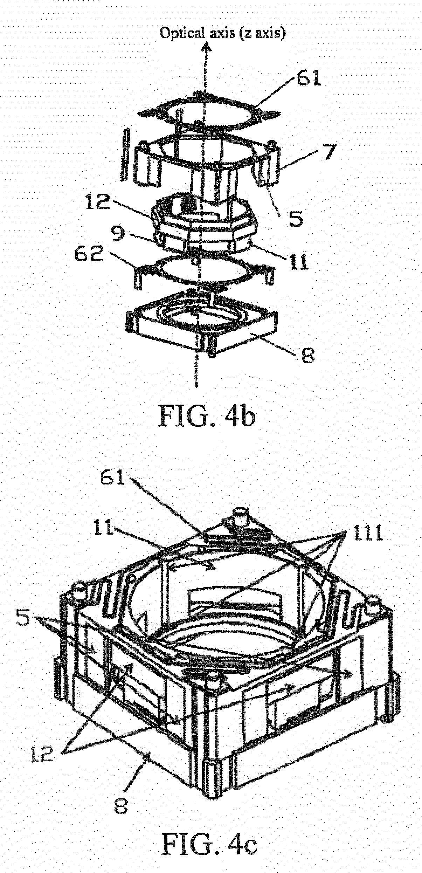

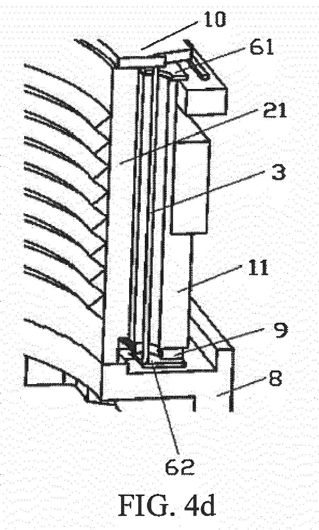

FIG. 4 is an embodiment of the autofocus mechanism I of the miniature lens driving apparatus of the present invention. FIG. 4a is a schematic exploded diagram of the autofocus mechanism 1. FIG. 4b is a schematic diagram of assembling corresponding parts. FIG. 4c is a schematic structural diagram of the assembled autofocus mechanism 1. FIG. 4d is a schematic sectional diagram of the autofocus mechanism 1. In this embodiment, the autofocus mechanism 1 includes a base 8, spring sheets 6 (an upper spring sheet 61 and a lower spring sheet 62), a magnet seat 7, at least one magnet 5, at least one coil 12, and an autofocus moving holder 11. The magnet seat 7 is fixed on the base 8 and is a fixed and unmovable part in the autofocus mechanism 1. In some embodiments, the magnet seat 7 and the base 8 are designed into a whole. The at least one magnet 5 is fixed on the magnet seat 7. The at least one coil 12 is disposed on the autofocus moving holder 11. The at least one coil 12 and the at least one magnet 5 of the autofocus mechanism 1 are operatively associated with each other, to move the autofocus moving holder 11 along an optical axis. Although in this embodiment, four magnets 5 are preferably disposed, needless to say, the use of one, two, three or more magnets 5 during implementation also does not depart from the scope of protection defined herein.

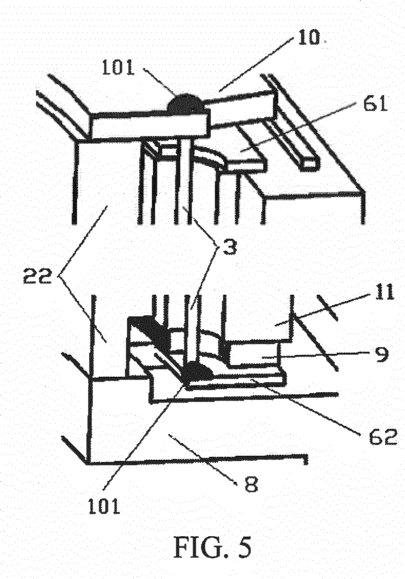

To enable the autofocus moving holder 11 to have more desirable strength and to prevent the autofocus moving holder 11 from deformation, an annular reinforcing element 9 is disposed at a lower end of the autofocus moving holder 11. The reinforcing element 9 has a plate-form structure, and may be made of a metal material or a non-metal material or may be made of a composite material. The lower end of the autofocus moving holder 11 is connected to an internal connecting portion 633 of a lower spring sheet 62 by using the reinforcing element 9. Specifically, the reinforcing element 9 is fixed at the lower end of the autofocus moving holder 11, and the reinforcing element 9 is connected to the internal connecting portion 633 of the lower spring sheet 62. Therefore, a layer order (see FIG. 5) of the autofocus moving holder 11/the reinforcing element 9/the lower spring sheet 62 is formed. In some embodiments, the internal connecting portion 633 of the lower spring sheet 62 is fixed at the lower end of the autofocus moving holder 11, and the reinforcing element 9 is connected to the internal connecting portion 633 of the lower spring sheet 62. Therefore, a layer order of the autofocus moving holder 11/the lower spring sheet 62/the reinforcing element 9 is formed. In some other embodiments, the reinforcing element 9 is connected to the internal connecting portion 633 of the lower spring sheet 62 to form a composite body, and this composite body is fixed at a lower portion of the autofocus moving holder 11 by using the reinforcing element 9 or the internal connecting portion 633 of the lower spring sheet 62, but is not on an end surface. In some other embodiments, the reinforcing element 9 is at the same time also used as the string connecting piece 10.

FIG. 4 also shows that the upper spring sheet 61 is disposed at an end of the autofocus moving holder 11, and the lower spring sheet 62 is disposed at the other end of the autofocus moving holder 11. The upper spring sheet 61 and the lower spring sheet 62 are simultaneously connected to the stationary part of the autofocus mechanism 1 (this part is usually also a stationary part of the miniature lens driving apparatus). The upper spring sheet 61 and the lower spring sheet 62 follow the action of the autofocus moving holder 11, to generate elastic deformations, and when a current decreases or is off, the autofocus coil 12 drives the autofocus moving holder 11 to restore the original position, to further implement restoration of the lens holder 21 to the original position. Since the elastic deformations of the upper spring sheet 61 and the lower spring sheet 62 are consistent in magnitude and direction, two ends of the autofocus moving holder 11 are under the effect of elastic forces having the same magnitude and direction, so that the movement of the autofocus moving holder 11 can be more stable, thereby improving imaging quality of an image. It should be noted that the so-called "an end" and "the other end" in the foregoing "the upper spring sheet 61 is disposed at an end of the autofocus moving holder 11, and the lower spring sheet 62 is disposed at the other end of the autofocus moving holder 11" is not limited to an end surface, but instead generally refer to an area near the end surface, with the end surface included.

FIG. 5 is a sectional diagram of an embodiment of the apparatus of the present invention to describe a connection manner of strings. In FIG. 5, the lens holder 21 and the string connecting piece 10 belong to the optical image stabilization mechanism 2 and are located on a left side of the sectional diagram. In the figure, the lens holder 21 is drawn to be placed on the base 8 of the autofocus mechanism 1. It should be noted that the lens holder 21 and the base 8 herein are not connected. Therefore, the lens holder 21 may be movable with respect to the base 8. In some examples, a gap is disposed between the lens holder 21 and the base 8. That is, the lens holder 21 is not directly placed on the base 8, but instead, is suspended in the air above the base 8. In this embodiment, the string connecting piece 10 is fixed at an upper end of the lens holder 21, and the string 3 is connected to the string connecting piece 10. In this embodiment, other end of the string 3 is connected to the lower spring sheet 62 (FIG. 5). In another embodiment, the string 3 may be connected to the reinforcing element. In some other embodiments, the string 3 may be directly connected to the autofocus moving holder 11.

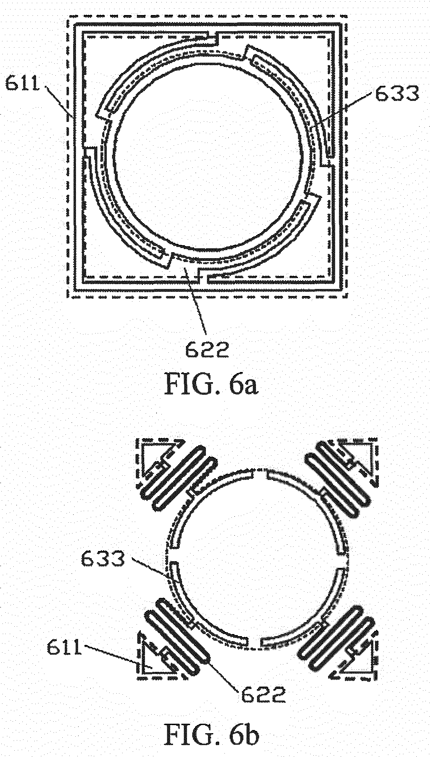

For a connection manner between the string 3 and the string connecting piece 10, various methods that can achieve a secure connection may be used. As shown in FIG. 6, the connection manner may be a manner such as bonding using an adhesive 101, tin soldering or molten welding, or may also be a manner of mechanical bundling. For a manner of a connection between the string 3 and the spring sheets 6, the reinforcing element 9 or the autofocus moving holder 11, various methods that can achieve a secure connection may be used. As shown in FIG. 6, the connection manner may be a manner such as bonding using an adhesive 101, tin soldering or molten welding, or may also be a manner such as mechanical bundling.

In this embodiment, for the string 3 (FIG. 2) in the optical image stabilization mechanism 2, an electrically conductive material or a non-electrically conductive material (that is, an insulating material) may be used. The electrically conductive material includes a metal wire, an enameled metal wire, a metal-clad metal wire, a metal-clad plastic wire, an electrically conductive organic fiber wire or combinations thereof. The non-electrically conductive material includes various macromolecule polymer materials, plastic, rubber, organic fibers, and the like.

The foregoing provides only preferred implementation manners of the present invention. It should be noted that a person of ordinary skill in the art may further make several improvements and modifications without departing from the principle of the present invention, and these improvements and modifications should also be considered to fall within the scope of protection of the present invention.

## Claims

1. A miniature lens driving apparatus, comprising a housing, at least two strings, an optical image stabilization mechanism, and an autofocus mechanism, wherein the optical image stabilization mechanism comprises a lens holder for holding an imaging lens, the optical image stabilization mechanism is capable of moving the lens holder along a direction substantially perpendicular to an optical axis, the autofocus mechanism comprises an autofocus moving holder, the autofocus mechanism is capable of moving the autofocus moving holder along a direction of the optical axis, one end of each of the at least two strings is connected to the lens holder, and another end of each of the at least two strings is connected to the autofocus moving holder.

2. The miniature lens driving apparatus according to claim 1, wherein the optical image stabilization mechanism further comprises at least two coils and at least one magnet, and the at least two coils and the at least one magnet are operatively associated with each other, to move the lens holder along the direction substantially perpendicular to the optical axis.

3. The miniature lens driving apparatus according to claim 2, wherein the autofocus mechanism further comprises at least one coil, at least one magnet, an upper spring sheet, and a lower spring sheet, the at least one coil and the at least one magnet are operatively associated with each other, to move the autofocus moving holder along the direction of the optical axis, an internal connecting portion of the upper spring sheet is connected to an upper end of the autofocus moving holder, an outer connecting portion of the upper spring sheet is connected to a stationary part of the autofocus mechanism, an internal connecting portion of the lower spring sheet is connected to a lower end of the autofocus moving holder, and an outer connecting portion of the lower spring sheet is connected to the stationary part of the autofocus mechanism.

4. The miniature lens driving apparatus according to claim 3, wherein the optical image stabilization mechanism and the autofocus mechanism share at least one magnet.

5. The miniature lens driving apparatus according to claim 3, wherein the optical image stabilization mechanism further comprises a string connecting piece fixed at an upper end of the lens holder, and an end of the string is connected to the string connecting piece.

6. The miniature lens driving apparatus according to claim 3, wherein an end of the string is connected to the upper spring sheet or the lower spring sheet, and is connected to the autofocus moving holder by using the upper spring sheet or the lower spring sheet.

7. The miniature lens driving apparatus according to claim 5, wherein the string connecting piece is formed of an insulating material, an electrically conductive material or a composite material, and a circuit is disposed on the string connecting piece.

8. The miniature lens driving apparatus according to claim 5, wherein the string connecting piece is a printed circuit board (PCB) disposed with a circuit and/or pad.

9. The miniature lens driving apparatus according to claim 1, wherein the autofocus mechanism further comprises a reinforcing element used to increase rigidity of the autofocus moving holder, and the reinforcing element is fixed at a lower portion of the autofocus moving holder.

10. The miniature lens driving apparatus according to claim 9, wherein the lower spring sheet and the reinforcing element are securely connected to each other, and are connected to the lower portion of the autofocus moving holder via the connection between the lower spring sheet and the reinforcing element.

11. The miniature lens driving apparatus according to claim 1, wherein the string is a metal wire, a metal-clad plastic wire, an electrically conductive organic fiber wire or combinations thereof.

12. The miniature lens driving apparatus according to claim 1, wherein the string is made of an electrically conductive material or non-electrically conductive material.

13. The miniature lens driving apparatus according to claim 1, wherein the string and the lens holder are fixedly connected to each other and the string and the autofocus moving holder are fixedly connected to each other by using a connection manner of bonding using an adhesive, tin soldering, high-temperature molten welding or mechanical bundling.
